# EUROPEAN PATENT APPLICATION

(11) **EP 3 360 434 A1**
(43) Date of publication of application: **15.08.2018**
(21) Application number: 17202108.1
(22) Date of filing: 15.01.2014
(51) Int. Cl.: A41D 27/00, A41D 13/12, A41D 27/12, A61G 7/05, C08J 5/16, D04B 1/00, A47C 31/10, A47G 9/02, A41B 17/00, A41D 10/00, A61G 7/057, B32B 5/02, B32B 5/26, D04B 1/12, A47G 25/90

(54) **GARMENT AND COVER COMBINATION TO AID IN USER MOBILITY**

(30) Priority: 19.01.2013 US 201361754557 P
(62) Divisional of application: 14741134.2
(71) Applicant: McGovern, Nancy, Kamloops, BC V2E 2B7 (CA)
(72) Inventor: McGovern, Nancy, Kamloops, BC V2E 2B7 (CA)
(74) Representative: Godlewski, Piotr

(57) **Abstract**

A combination (10) is provided comprising: a three over and one under or four over and one under weave fabric (12); and a machine knit fabric (14) included in a garment, the weave fabric comprising a surface having a long vector (30), the machine knit fabric having a first vector (20) and a second vector (22), wherein orientation of the long vector relative to the first or second vector at a vector angle of about 45 degrees to about 135 degrees results in low friction between the fabrics associated with movement in all directions, and parallel orientation results in high friction between the fabrics associated with movement in either the lateral or longitudinal direction, but not both.

## Description

### BACKGROUND OF THE INVENTION

### Field of the Invention

The present technology relates to the use of specific combinations of fabrics to reduce friction between a user and a surface, such as a bed, a chair, or a car seat. More specifically, the technology relates to garments made from a stretchable machine knit fabric in combination with a cover made from a weave fabric or vice versa.

### Description of the Related Art

As the population ages, we are faced with a rising number of people living at home who have need of physical care. Health care support systems are increasingly being developed to enable aging at home thereby hoping to avoid admission to residential care facilities that are few in number compared to the projected needs. While most people consider losing the ability to walk freely and safely about a house a major reason for someone to have to leave their house and move to a care facility, there are far more insidious mobility issues that plague a high number of aged people. One of the most significant of these is being able to move on a surface, such as a chair, a bed, a car seat and the like. Equally as significant, is an inability to don and doff clothing easily. Of course, these concerns are equally as significant for younger people who have mobility issues. It is also thought that improving mobility while at rest can improve a night's sleep for many people.

There is prior art that addresses the issue of reducing friction between a person and a surface. Most of this prior art is directed to reducing bedsores and related maladies in the bedridden, or assisting caregivers in moving supine patients. For example, US Publication No. 20110167532 discloses a two-ply fabric low friction interface made of two layers of tricot fabric. Each layer has a shiny side and the shiny sides of the two layers of fabric face each other. Each layer of fabric has a machine direction M, and the layers of fabric are positioned such that the machine direction M of one layer is perpendicular to the other layer. A garment includes a low friction zone and a higher friction zone adjacent the low friction zone, the higher friction zone comprising a material different from a material of the low friction zone. The low friction zone comprises two layers of fabric with their shiny sides, facing each other and their machine directions M oriented perpendicularly. Also described is a method of preventing or treating a skin wound comprising clothing a living being in a garment.

Another example is in US Patent No. 5,123,113 where a selective body portion protecting means for use on an elbow, knee, leg, calf, or the like, to prevent friction on a wound, burn, bed sore, or the like is disclosed. The protector includes a first non-woven fabric which contacts the body portion, and a second frictionless fabric which contacts the first non-woven fabric, and a third frictionless fabric which contacts the second frictionless fabric and which rests on a support. The first and second fabrics typically are formed and joined so as to envelop the selective body portion.

Another application of technologies that reduce friction between fabrics is in moving patients. In US Patent No. 4,944,053 a fabric device useful in facilitating the movement of a person's body while lying on a bed, resting surface, examining table or the like is disclosed. The fabric device comprises a first fabric made from a non-woven material similar to HANDI-WIPE® material. This first fabric is secured to an identically sized and shaped second fabric of relatively frictionless material such as woven, synthetic material or even a plastic sheet.

Another example is in US Patent No. 6,349,432 in which a method and apparatus for patient transfer is disclosed in which unidentified low friction materials are used to assist in moving or transferring a supine person or other body between two platforms, permitting a single caregiver of less than average strength to perform such transfer between an unmodified bed and a second surface, which may for example be part of a transport device.

In US Patent 7,281,549 and US Publication No. 20080121305, a low friction fabric is disclosed that is constructed of a first layer of woven polyester fibers with an upper and lower woven surface attached to and adjacent a second layer of the same weave of polyester fibers, the second layer having an upper and lower surface. The fabric has a satin weave (over four and under one). Each of the woven layers comprising a straight yarn in the warp of the weave pattern with the weaves of the layers being oriented at a 90 degree angle to one another. This fabric is contemplated for use in socks, bandages, a shoe insert, sheet, pillowcase and other bed linen.

A combination is needed that includes: clothing that is easy to don and doff, especially for people with reduced mobility or flexibility, and that is comfortable; and a fabric surface that when used with the clothing provides low friction movement in at least one direction and high friction movement in at least one other direction

### SUMMARY OF THE INVENTION

The present technology provides combinations that allow for low friction movement in one or more directions - back and forth laterally, or up and down, longitudinally and preferably, high friction in at least one other direction. Advantageously, by selecting fabric combinations, one can obtain comfortable, easy to don and doff clothing that when in combination with the appropriately selected fabric provides:
1. Good lateral movement back and forth, with high friction longitudinally, and therefore limited movement longitudinally;
2. Good longitudinal movement up and down, with high friction laterally, and therefore limited movement laterally;
3. Good longitudinal movement in only one direction -preferably upward, with low friction laterally;
4. Low friction in all directions in one or more orientations, with taffeta providing low friction in all directions in all orientations with most fabrics tested; and
5. A combination of low friction in all directions and either good lateral movement back and forth with high friction longitudinally or good longitudinal movement in only one direction.

Specifically, the present technology provides low friction combination comprising a garment and a layer of a weave fabric, the garment comprising a machine knit fabric having a surface with a first vector or an asperities vector, the weave fabric comprising a surface having a long vector and a short vector, or an asperities vector, wherein at least a portion of the surface of the machine knit fabric is configured for contact with the surface of the weave fabric at a vector angle of about 45 degrees to about 135 degrees to reduce friction between the garment and the weave fabric.

Preferably, the vector angle is about 90 degrees.

The garment is preferably selected from the group consisting of a nightgown, hospital gown, underwear, pants, pajamas, shirt, dress, shorts, boxers, a skirt, socks, sports clothing, sleeves, linings, and leggings for under athletic padding and guards, braces and supports.

Preferably, the machine knit fabric is a jersey knit, a pique, a tricot, an interlock knit or a micromesh, each comprising one or more of silk, polyester or nylon.

Advantageously, the machine knit fabric is a jersey knit, a pique, a tricot, an interlock knit or a micromesh, each comprising one or more of silk, polyester or nylon.

The machine knits may be with or without elastane.

The weave fabric may be a satin weave, with or without elastane.

Preferably the weave fabric is a sheet or a panel in a sheet.

Most preferably the machine knit fabric is a polyester interlock knit.

Preferably, a portion of the machine knit fabric of the garment is aligned to reduce friction between the garment and the weave fabric and a remainder of the garment is aligned to increase friction between the garment and the sheet.

Alternatively, a portion of the sheet is aligned to reduce friction between the garment and the sheet and a remainder of the sheet is aligned to increase friction between the garment and the sheet.

### BRIEF DESCRIPTION OF THE DRAWINGS

Figure 1 is the combination of the present technology.
Figure 2 shows the details of the weave of the combination of Figure 1.
Figure 3 shows the asperities vector of the present technology.
Figure 4 shows vector angles.

### DESCRIPTIONS OF THE PREFERRED EMBODIMENTS

### Definitions:

### Satin fabric:

A satin fabric is a fabric with a three over one or a four over one weave. It can be made of a range of fibres, including but not limited to cotton, silk and synthetics.

### Weft knit:

A weft knit is made with a single yarn that's looped to create horizontal rows, or courses, with each row built on the previous row. All weft knits fall into three basic categories: rib knits, which are a combination of knit and purl stitches; purl knits, which are made with purl stitches alone, and jersey knits, which are made with knit stitches on the front and purl stitches on the reverse. Only machine knit fabrics are included in the present technology.

### Warp knit:

A warp knit is made with multiple parallel yarns that are simultaneously looped vertically to form the fabric. Both warp and weft knits can be made either on a circular knitting machine, which produces a tube of fabric, or on a flat-bed knitting machine, which delivers flat yardage.

### Tricot:

Face has fine lengthwise ribs; reverse has crosswise ribs. Some machines can produce complex patterns, and some can incorporate a weft insertion (extra yarn inserted crosswise) for added texture or color. Tricot has some lengthwise stretch or crosswise stretch.

### Interlock fabric:

Compound fabric made by "inter-knitting," or interlocking, two simple ribbed fabrics, each made with single yarn. Generally has fine ribs running lengthwise. Fabric's face and reverse look same, making it reversible.

### Interlock Knit:

A fabric that has two plies knit simultaneously to form one thicker and heavier ply. It has more natural stretch than a jersey knit, and the same appearance and feel on both sides. It has an asperities vector.

### Jersey knit:

Also referred to as plain knit or single knit. Has distinct right and wrong sides, with fine ribs running lengthwise on fabric's face (outside), and semicircular loops running across reverse. The outer surface is smoother than the inner surface. Many variations of stitches and fibers create wide variety of single knits, ranging from delicate openwork to heavy, thick piled fabric. It has little or no lengthwise stretch, varying amounts of crosswise stretch.

Pique Knit: A single knit construction also known as honeycomb or mesh.

### Taffeta:

Taffeta is a plain weave fabric (over one under one). Two taffetas are used in testing - one with carbon fibre thread arranged longitudinally, the other is without the carbon fibre thread.

### Micromesh:

Micromesh is a knit.

### Microfiber Fabric:

Microfibre fabrics are plain weave and have significantly more tendrils of yarn per strand than do most other fabrics. For example, other fabrics may have 70-80 tendrils of yarn per strand whereas microfibre may have about 216 tendrils per strand.

### Long vector:

A vector aligned with the length of the "over" yarn in a satin or satin-type weave. In other words, the direction of the "four" in an under one and over four weave, and the "three" in an under one and over three weave. The long vector is also the vector aligned with the length of ribbing in knits. The long vector is used when there are macroscopic differences in the weave or the knit.

### Asperities vector:

A vector aligned with the direction of movement of a plain weave fabric or a knit fabric giving the lowest friction. The asperities vector is used when there are no macroscopic differences in the weave or knit but are microscopic differences in the weave or knit.

### Four directions of movement:

In the context of the present technology, four directions of movement is indicative of movement in all directions.

### Two directions of movement:

In the context of the present technology, two directions of movement is indicative of good lateral movement with poor longitudinal movement, or poor lateral movement with good longitudinal movement. Alternatively, this can be defined as high friction when the fabrics are moved laterally, and low friction when the fabrics are moved longitudinally, or the converse.

### Orthogonal:

In the context of the present technology, orthogonal refers to about a ninety degree angle between the vectors.

### Parallel:

In the context of the present technology, parallel refers to about a zero degree angle between the vectors.

### Vectors:

In the context of the present technology, all vectors are bidirectional vectors.

Laterally and longitudinally are used as relative terms and do not indicate movement across the machine direction or along the machine direction necessarily, but may.

### Description:

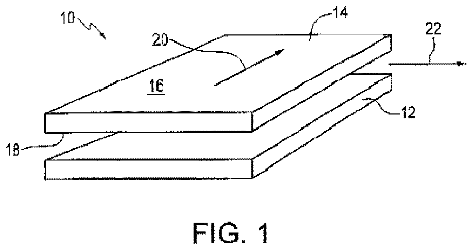

A combination, generally referred to as 10 is shown in Figure 1. A weave fabric 12 interacts with a machine knit fabric 14. The knit fabric 14 has a first surface 16 and a second surface 18, as shown in Figure 1. Most knit fabrics have ribbing or other discernible sculpturing on the first surface 16 and ribbing or other discernible sculpturing on the second surface 18. The ribbing on the two surfaces are generally orthogonal to one another. The direction of the ribbing on the first surface 16 is referred to as the first vector 20 and the direction of the ribbing on the second surface 18 is referred to as the second vector 22. Movement along the direction of ribbing is associated with a lower coefficient of friction.

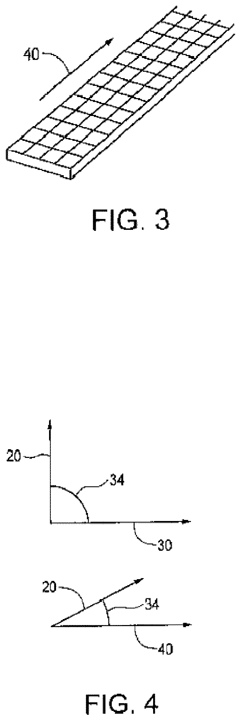

Through experimentation, it was found that interlock knits, which do not have ribbing or any apparent directionality and therefore do not have first or second vectors, have asperities vectors. An asperities vector 40 (as shown in Figure 3) results in microscopic interactions between layers of fabric. Without being bound to theory, this may result from use of differing yarns, differing type of fibre, type of blend, blend proportion, yarn structure, fabric structure, crimp and crimp height, compressibility, and tension.

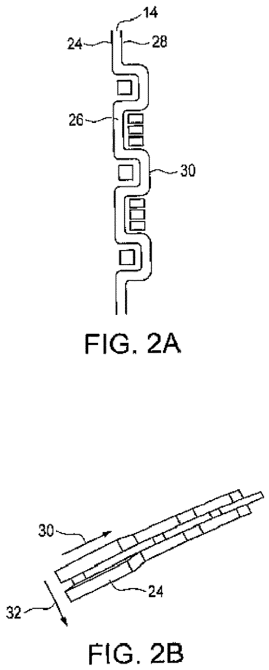

As shown in Figure 2, the weave fabric 12 preferably has an under one and over four weave (referred to as a satin weave), but may have an under one and over three weave, the latter providing for a fabric that is more durable and less prone to pulls, while still offering sufficient length of warp over weft, or weft over warp to allow for a low coefficient of friction. Whether weft over warp or warp over weft, the first weave surface 24 has the over three 26 and is therefore a more even surface and the second weave surface 28 has the under one 30 and is therefore a more sculpted surface. The direction of the fabric on the first weave surface 24 is defined by the over three 26 and is referred to as the long vector 30 and the direction of the fabric orthogonal to the long vector 30 is the short vector 32. The long vector 30 is therefore the direction that provides a lower coefficient of friction.

As shown in Figure 3, unbalanced plain weave fabrics are defined as having an asperities vector 40 rather than a long vector 30. The long vector 30 results in macroscopic interactions between layers of fabric, whereas the asperities vector 40 results in microscopic interactions between layers of fabric. The unbalanced plain weave may result from use of differing yarns, differing type of fibre, type of blend, blend proportion, yarn structure, fabric structure, crimp and crimp height, compressibility, and tension.

As shown in Figure 4, depending on the desired outcome and the fabrics used, the machine knit fabric 14 and the weave fabric 12 are combined to provide various vector angles 34. In general, a low coefficient of friction in all directions can be obtained when the machine knit fabric 14 and the weave fabric 12 are used in combination such that one of the first vector 20 and second vector 22 are orthogonal to the long vector 30 or asperities vector 40, however, this is not always the case as can be seen from the table below. Suitable vector angles 34 can be about 45 to about 135 degrees, preferably about 60 to about 120 degrees, still more preferably about 80 to about 100 degrees, and most preferably about 90 degrees.

As shown in Figure 5, the fabrics can be combined as a machine knit fabric garment 36 and a weave fabric surface 38, wherein the weave fabric surface 38 may be a sheet, a car seat cover, a chair cover, a boot lining, a shoe lining, an exercise mat cover, transfer board cover, athletic padding and guards, lining for braces and supports, and the like. The machine knit fabric garment 36 may be pajamas, a nightdress, shirt, shorts, boxers, pants, a skirt, socks, sports clothing, sleeves and leggings for under athletic padding and guards, braces and supports and the like. The advantages of this combination are that the garments are easy to don and doff, which is a significant advantage to the elderly, injured or infirm, they provide some flexibility and stretch, they are frequently breathable, they are frequently wicking, and they are frequently antimicrobial.

Alternatively, the fabrics can be combined in a machine knit fabric surface and a weave fabric garment, wherein the machine knit fabric surface may be a sheet, a car seat cover, a chair cover, a boot lining, a shoe lining, an exercise mat cover, transfer board cover, athletic padding and guards, lining for braces and supports, and the like. The weave fabric garment may be pajamas, a nightdress, shirt, shorts, boxers, pants, a skirt, a dress, socks, sports clothing, sleeves and leggings for under athletic padding and guards, braces and supports and the like. The advantages of this combination are that the machine knit fabric surface can provide some flexibility and stretch, they are frequently breathable, they are frequently wicking, and they are frequently antimicrobial. The weave fabric may include elastane. This makes the garment easier to don and doff as it increases the flexibility and stretch of the fabric.

While the prior art has shown that a satin weave on satin weave or a tricot on tricot can result in lower coefficients of friction when the fabrics are aligned orthogonally, it would not be expected that a combination of a weave and a knit could also be oriented either parallel or orthogonally to produce low friction between these two very different fabric types. This finding allows us to exploit the advantages of each fabric as clothing or a covering, while providing combinations resulting in low friction. Another finding was that any orientation of taffeta provided low friction in all directions when used with almost any of the knit fabrics tested.

Advantageously, different coefficients of friction can be obtained. In other words, using specific combinations allows for a low coefficient of friction in two directions, for example, laterally (back and forth), and a higher coefficient of friction in the other two directions, for example, longitudinally (back and forth). Further, a low coefficient of friction can be had in one direction, for example, laterally forward, but not laterally back, nor longitudinally back or forward. This allows for very selective control of movement.

These are supported by the following examples.

### Example 1:

Coefficients of friction are determined using a weighted disc and a slider board. The weave fabric covers one of the disc or the slider board, and the machine knit fabric covers the other. The slider board is held at a set angle and the time for the weighted disc to travel the length of the slider board is determined. Low friction is recorded for fast travel times, and a high friction is recorded for a slow travel time. Four directions of travel were measured, and the results recorded. Low friction in all four directions indicated that the two fabrics had a low friction interface for all directions of movement. In examples 2 through 7, the weave fabrics were a Satin [83%/17% polyester/cotton], over four, under one weave, two types of 100% polyester taffeta unbalanced plain weave, one with carbon fibre thread and the other without carbon fibre thread, Durable Water Repellent (DWR) coated 100% polyester unbalanced plain weave microfiber and 100% polyester unbalanced plain weave microfibre.

### Example 2:

The weave fabrics were a Satin [83%/17% polyester/cotton], 100% polyester taffeta with carbon fibre thread, 100% polyester taffeta, DWR coated 100% polyester microfiber and 100% polyester microfibre. The knit fabric tested was 87%/13% polyester/Spandex® [elastane] [an elastic fibre], using the method of Example 1 (see Table 1). This fabric is a jersey warp knit. Regardless of whether the first surface or the second surface of the 87%/13% polyester spandex knit fabric was used against the first weave surface of the weave fabric, low friction in four directions was obtained when the first or second vectors were orthogonal to the long vector for Satin and the asperities vector for 100% polyester with carbon fibre. When the vector angle was reduced to zero, in other words, when the first or second vectors were parallel to the long vector or asperities vector, low friction was found along the long vector and high friction was found along the short vector. This provides the potential to allow two directional movement or slide, while inhibiting four (all) directional slide. Hence, for example, if a user is in an inclined bed, the orientation of the fabrics would be such that lateral movement was made easy, while longitudinal movement was inhibited, hence reducing or ameliorating the problem of the user sliding out of position, and ending up slumped at the foot of the bed. Unfortunately, it is the wrong side of the knit that provides better lateral movement. The DWR coated 100% polyester microfibre fabric provided low friction in two directions when the first or second vectors were orthogonal or parallel to the asperities vector, and high friction in the other two directions. Thus, this fabric combination would be suitable for situations where either a longitudinal movement was desirable, and a lateral movement was not, or a lateral movement was desirable, and a longitudinal movement was not. The 100% microfibre polyester provided medium low friction in two directions when either the first or second vectors were orthogonal to the asperities vector and provided very high friction when these vectors were parallel to the asperities vector. Hence, this fabric could be useful when lateral movement with a medium low level of reduced friction is desirable.

**Table 1: 87%/13% polyester/spandex jersey knit and weave fabrics. The number represents the number of directions of slide, wherein 4L is indicative of all directions and 2L is indicative of a directional selectivity (either lateral or longitudinal), and the letter represents the friction, with L being low friction, ML being medium low friction, M being medium friction and H being high friction.**

| | 1^{st} vector | 1^{st} vector | 2^{nd} vector | 2^{nd} vector |
|---|---|---|---|---|
| Relative to long/asperities vector | orthogonal | parallel | parallel | orthogonal |
| **Satin 83% polyester 17% cotton** | 4L | 2L-2H | 2L*-2H | 4L |
| **100% polyester taffeta with carbon fibre thread** | 4L | 2L-2H | 2L*-2H | 4L |
| **100% polyester taffeta** | 4L | 2L-2ML | 2L*-2M | 4L |
| **DWR coated 100% polyester microfibre** | 2L-2H | 2L-2H | 2L*-2H | 2L*-2H |
| **100% Polyester microfibre** | 2ML-2H | 2ML-2H | 2ML*-2H | 2ML*-2H |

| | | | | |
|---|---|---|---|---|
| * lateral direction has the lower friction | | | | |

### Example 3:

The weave fabrics were a Satin [83%/17% polyester/cotton], 100% polyester taffeta with carbon fibre thread, 100% polyester taffeta (without carbon fibre thread), DWR coated 100% polyester microfiber and 100% polyester microfibre. The knit fabric tested was Tricot [100% Antron® nylon] using the method of Example 1 (see Table 2). This is a machine knit fabric. Regardless of whether the first surface or the second surface of the Tricot knit fabric was used against the first weave surface of the weave fabric, low friction in four directions was obtained when the first or second vectors were orthogonal (i.e. were at about a ninety degree angle) to the long vector for Satin or asperities vector for 100% polyester taffeta with or without carbon fibre thread. When the second vector was parallel to the long vector or asperities vector, low friction was found along the long vector or asperities vector and high friction was found along the short vector. When the first vector was parallel to the long vector or asperities vector, a slightly higher friction was found along the long vector and high friction was found along the short vector. Hence this combination provides less potential for use in situations where either lateral or longitudinal movement was desirable, and the other direction of movement was not. The tricot knit and 100% polyester microfiber produced low friction in two directions and high friction in the other two directions for all vector combinations. As noted, when the second vector was parallel or orthogonal to the asperities vector, friction was low when the fabric was moved laterally and was high when it was moved longitudinally. This is especially desirable.

**Table 2: Tricot knit and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | orthogonal | parallel | parallel | orthogonal |
| **Satin 83% polyester 17% cotton** | 4L | 2M-2H | 2L*-2M | 4L |
| **100% polyester taffeta with carbon fibre thread** | 4L | 2ML-2H | 2L*-2M | 4L |
| **100% polyester taffeta** | 4L | 2ML-2M | 2L*-2ML | 4L |
| **DWR coated 100% polyester microfibre** | 2L-2H | 2L-2H | 2L*-2ML | 2L*-2ML |
| **100% Polyester microfibre** | 2L-2H | 2L-2H | 2L*-2H | 2L*-2H |

| | | | | |
|---|---|---|---|---|
| *lateral direction has the lower friction | | | | |

### Example 4:

The weave fabrics were a Satin [83%/17% polyester/cotton], 100% polyester taffeta with carbon fibre thread, 100% polyester taffeta (without carbon fibre thread), DWR coated 100% polyester microfibre and 100% polyester microfibre. The knit fabric tested was 100% polyester micromesh using the method of Example 1 (see Table 3). Low friction in four directions was obtained when the first vector was orthogonal to the long vector or the second vector was parallel to the long vector for Satin and 100% polyester taffeta with carbon fibre thread. When the first vector was parallel or the second vector was orthogonal to the long vector, low friction was found along the long vector and high friction was found along the short vector. This provides the potential to allow two directional movement or slide, while inhibiting four (all) directional slide. Unfortunately, it is the wrong side of the knit that provides better lateral movement.

Similarly, the DWR coated 100% polyester microfibre fabric with the polyester micromesh would be suitable for use when two directions of movement, for example, lateral movement was desirable, and the other direction of movement, for example, longitudinal, was not desirable, as low friction was found along the long vector and high friction was found along the short vector when the first vector was parallel or the second vector was orthogonal to the long vector. The polyester taffeta with carbon fibre and micromesh combination also had one orientation that resulted in good slide-ability in two directions, for example, longitudinal, and high friction in the other two directions, for example lateral.

**Table 3: Micromesh knit and weave fabrics. The number represents the number of directions of slide, wherein 4L is indicative of low friction in all directions, and the letter represents the -friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | orthogonal | parallel | orthogonal | parallel |
| **Satin 83% polyester 17% cotton** | 4L | 2M-2H | 4L | 2M-2H |
| **100% polyester taffeta with carbon fibre thread** | 4L | 2L-2H | 4L | 2L-2H |
| **100% polyester taffeta** | 4L | 2L-2ML | 4L | 2L-2ML |
| **DWR coated 100% polyester microfibre** | 2L-2MH | 2L-2H | 2L-2MH | 2L-2H |
| **100% Polyester microfibre** | 2M-2H | 2ML-2H | 2M-2H | 2ML-2H |

### Example 5:

The weave fabrics were a Satin [83%/17% polyester/cotton], 100% polyester taffeta with carbon fibre thread, 100% polyester taffeta (without carbon fibre thread), DWR coated 100% polyester microfiber and 100% polyester microfibre. The knit fabric tested was 82%/18% polyester spandex using the method of Example 1 (see Table 4). It is a weft knit jersey. Both satin and the 100% polyester with carbon fibre thread provided four directions of movement when either the first or second vectors were orthogonal to the long vector or asperities vector, respectively. The polyester with carbon fibre thread also provided for longitudinal slide with high friction in the opposite direction when the vectors were in the parallel orientation. This weft knit jersey with either DWR coated 100% polyester microfibre or the 100% polyester microfibre fabrics provided for two directions of movement (laterally) with low friction and high friction in the other directions (longitudinally) when the first vector was either parallel or orthogonal to the asperities vector. These combinations are therefore very useful for situations where lateral movement is desirable and longitudinal movement is not.

**Table 4: 82%/18% polyester spandex and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | orthogonal | parallel | parallel | orthogonal |
| **Satin 83%polyester 17% cotton** | 4L | 2MH*-2H | 2MH-2H | 4L |
| **100% polyester taffeta with carbon fibre thread** | 4L | 2L*-2H | 2L-2H | 4L |
| **100% polyester taffeta** | 4L | 2L*-2ML | 2L-2ML | 4L |
| **DWR coated 100% polyester microfibre** | 2L*-2H | 2L*-2H | 2L-2H | 2L-2H |
| **100% Polyester microfibre** | 2L*-2H | 2L*-2H | 2L-2H | 2L-2H |

| | | | | |
|---|---|---|---|---|
| *lateral direction has the lower friction | | | | |

### Example 6:

The weave fabrics were a Satin [83%/17% polyester/cotton], 100% polyester with carbon fibre thread, 100% polyester taffeta (without carbon fibre thread), DWR coated 100% polyester microfiber and 100% polyester microfibre. The knit fabric tested was 85%/15% nylon spandex using the method of Example 1 (see Table 5). It is a weft knit jersey. Satin and the 100% polyester with carbon fibre thread provided four directions of movement when the first or second vectors were orthogonal to the long vector. The combination of the knit fabric and the 100% polyester without carbon fibre (taffeta) had low friction in all orientations. Both the satin and the 100% microfibre polyester provided for low lateral friction and high longitudinal friction depending on the orientation of the respective vectors, on the right side of the fabric. This is especially useful in situations where lateral movement is desirable and longitudinal movement is not. The DWR coated 100% polyester fabric additionally provided for four directions of movement when the second vector was orthogonal to the asperities vector. The polyester microfibre fabric provided two directions of movement with low friction and two directions of movement with high friction in all fabric orientations. Notably, the taffeta provided for low friction in all orientations.

**Table 5: 85%/15% nylon spandex and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | orthogonal | parallel | parallel | orthogonal |
| **Satin 83% polyester 17% cotton** | 4L | 2L*-2H | 2L-2H | 4L |
| **100% polyester taffeta with carbon fibre thread** | 4L | 2L*-2M | 2L-2M | 4L |
| **100% polyester taffeta** | 4L | 4L | 4L | 4L |
| **100% polyester microfibre coated with DWR** | 2L*-2ML | 2L*-2MH | 2L-2MH | 2L-2ML |
| **100% Polyester microfibre** | 2L*-2H | 2L*-2H | 2L-2H | 2L-2H |

| | | | | |
|---|---|---|---|---|
| *lateral direction has the lower friction | | | | |

### Example 7:

The fabrics can be combined as a knit fabric garment 36 and a weave fabric surface 38, wherein the weave fabric surface 38 may be a sheet, a car seat cover, a chair cover, a boot lining, a shoe lining, an exercise mat cover, transfer board cover, athletic padding and guards, lining for braces and supports, and the like. The knit fabric garment 36 may be pajamas, a hospital gown, a nightdress, shorts, boxers, pants, a skirt, a dress, socks, sports clothing, sleeves and leggings for under athletic padding and guards, braces and supports and the like. Alternatively, the fabrics can be combined in a knit fabric surface and a weave fabric garment, wherein the knit fabric surface may be a sheet, a car seat cover, a chair cover, a boot lining, a shoe lining, an exercise mat cover, transfer board cover, athletic padding and guards, lining for braces and supports, and the like. The weave fabric garment may be pajamas, a nightdress, shirt, shorts, boxers, pants, a skirt, a dress, socks, sports clothing, sleeves and leggings for under athletic padding and guards, braces and supports and the like. Both the selection of the fabrics and the orientation of them in terms of the relationship between the first and second vectors and the long vector can be determined from the above tables. Further, a barrier region may also be provided on either the garment or the surface that is made from the same material, oriented in a direction to inhibit movement, as needed. For example, there may be a region where all way movement is desired surrounded by a region or zone where only two way movement is desired, or no movement is desired. Careful selection of the fabrics can provide these combinations. Alternatively, different materials could be used that inherently have high friction, however, as noted, this would produce a garment that was obviously made of different fabrics.

### Example 8:

The knit fabric tested was 100% polyester interlock with wicking and antibacterial treatment. Both satin and the 100% polyester with carbon fibre thread provided four directions of movement with low friction when either the first or second vectors were orthogonal to the long vector or asperities vector, respectively. The satin and 100% polyester microfiber coated with DWR provided for longitudinal slide with low friction and with high friction in the lateral direction when the vectors were in the parallel orientation. Again, the taffeta provided for low friction in all directions, independent of the orientation.

**Table 6: 100% polyester interlock with wicking and antibacterial treatment and weave fabrics. The number represents the number of directions of slide, wherein 4L is indicative of low friction in all directions, and the letter represents the friction, with L being low friction, ML being medium low friction, M being medium friction, MH being medium high friction, and H being high.**

| | 1^{st} vector | 1^{st} vector | 2^{nd} vector | 2^{nd} vector |
|---|---|---|---|---|
| Relative to long/asperities vector | Orthogonal | Parallel | Orthogonal | Parallel |
| **Satin** | 4L | 2L-2H | 4L | 2L-2H |
| **100% polyester with carbon fiber thread** | 4L | 2L- 2M | 4L | 2L-2M |
| **100% polyester taffeta** | 4L | 4L | 4L | 4L |
| **100% polyester microfiber coated with DWR** | 2L-2MH | 2L-2H | 2L-2MH | 2L-2H |
| **100% polyester microfiber** | 2ML-2H | 2ML-2MH | 2ML-2H | 2ML-2MH |

### Example 9:

The knit was 100% recycled polyester interlock with wicking and antibacterial treatment. Both satin and the 100% polyester with carbon fibre thread provided four directions of movement when either the first or second vectors were orthogonal to the long vector or asperities vector, respectively. The satin and the 100% polyester with carbon fibre thread also provided for longitudinal slide with low friction and lateral movement with high friction when the vectors were in the parallel orientation. The 100% polyester microfiber coated with DWR also provided for longitudinal slide with low friction and lateral movement with high friction when the vectors were in the parallel orientation. This provides the potential to allow two directional movement or slide while inhibiting four directional slide. Again, the taffeta provided low friction in all directions independent of orientation.

**Table 7: 100% recycled polyester interlock with wicking and antibacterial treatment and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | Orthogonal | Parallel | Orthogonal | Parallel |
| **Satin** | 4L | 2L-2H | 4L | 2L-2H |
| **100% polyester with carbon fiber thread** | 4L | 2L-2H | 4L | 2L-2H |
| **100% polyester taffeta** | 4L | 4L | 4L | 4L |
| **100% polyester microfiber coated with DWR** | 2L-2MH | 2L-2H | 2L-2MH | 2L-2H |
| **100% polyester microfiber** | 2M-2H | 2MH-2H | 2M-2H | 2MH-2H |

### Example 10:

The knit was 100% polyester mesh with wicking yarn. Both satin and the 100% polyester with carbon fibre thread provided four directions of movement when either the first or second vectors were orthogonal to the long vector or asperities vector, respectively. The satin also provided for longitudinal slide with high friction in the other direction when the vectors were in the parallel orientation. This provides the potential to allow two directional movement or slide. Again, the taffeta provided low friction in all directions independent of orientation.

**Table 8: 100% polyester mesh with wicking yarn and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | Orthogonal | Parallel | Orthogonal | Parallel |
| **Satin** | 4L | 2L-2H | 4L | 2L-2H |
| **100% polyester taffeta with carbon fiber thread** | 4L | 2L-2MH | 4L | 2L-2MH |
| **100% polyester taffeta** | 4L | 4L | 4L | 4L |
| **100% polyester microfiber coated with DWR** | 2ML-2MH | 2ML-2H | 2ML-2MH | 2ML-2H |
| **100% polyester microfiber** | 2ML-2H | 2M-2H | 2ML-2H | 2M-2H |

### Example 11:

The knit was 47% nylon, 47% polyester, 6% elastane jersey knit with wicking and antibacterial treatment. The satin and the 100% polyester with carbon fibre thread provided four directions of movement when either the first or second vectors were orthogonal to the asperities vector. All except the taffeta provided for lateral slide with low friction and longitudinal movement with high friction when the second vectors were in the parallel orientation relative to the asperities vector. This provides the potential to allow two directional movement or slide (for example, either lateral or longitudinal but not both), while inhibiting four directional slide. Hence, for example, if a user is in an inclined bed, the orientation of the fabrics would be such that lateral movement was made easy, while longitudinal movement was inhibited, hence reducing or ameliorating the problem of the user sliding out of position, and ending up slumped at the foot of the bed. Again, the taffeta provided low friction in all directions independent of orientation.

**Table 9: 47% nylon, 47% polyester, 6% elastane jersey knit with wicking and antibacterial treatment and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | Orthogonal | Parallel | Parallel | Orthogonal |
| Satin | 4L | 2L-2H | 2L*-2H | 4L |
| 100% polyester taffeta with carbon fiber thread | 4L | 2L-2H | 2L*-2H | 4L |
| 100% polyester taffeta | 4L | 4L | 4L | 4L |
| 100% polyester microfiber coated with DWR | 2L-2H | 2L-2H | 2L*-2H | 2L*-2H |
| 100% polyester microfiber | 2L-2H | 2L-2H | 2L*-2H | 2L*-2H |

| | | | | |
|---|---|---|---|---|
| *lateral direction has the lower friction | | | | |

### Example 12:

The knit used was 82% polyester, 18% elastane jersey knit with wicking and antibacterial treatment. Both satin and the 100% polyester with carbon fibre thread provided four directions of movement when either the first or second vectors were orthogonal to the long vector or asperities vector, respectively. The satin also provided for either lateral or longitudinal slide with high friction in the other direction when the vectors were in the parallel orientation. This provides the potential to allow two directional movement or slide (for example, either lateral or longitudinal but not both), while inhibiting four directional slide. Hence, for example, if a user is in an inclined bed, the orientation of the fabrics would be such that lateral movement was made easy, while longitudinal movement was inhibited, hence reducing or ameliorating the problem of the user sliding out of position, and ending up slumped at the foot of the bed. Again, the taffeta provided low friction in all directions independent of orientation.

**Table 10: 82% polyester, 18% elastane jersey knit with wicking and antibacterial treatment and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| **Relative to long/asperities vector** | Orthogonal | Parallel | Parallel | Orthogonal |
| **Satin** | 4L | 2L-2H | 2L*-2H | 4L |
| **100% polyester taffeta with carbon fiber thread** | 4L | 2L-2MH | 2L*-2ML | 4L |
| **100% polyester taffeta** | 4L | 4L | 4L | 4L |
| **100% polyester microfiber coated with DWR** | 3L-1H^{**} | 2L-2H | 2L*-2ML | 2L*-2ML |
| **100% polyester microfiber** | 2L-2H | 3L-1H^{**} | 2L*-2M | 2L*-2H |

| | | | | |
|---|---|---|---|---|
| *low friction in the lateral direction. ** low friction one direction laterally, and high the other direction laterally, with high friction longitudinally. Functionally, this is the ideal for an adjustable bed in that there could be low friction for side to side movement one direction across the bed, with higher friction down the bed deterring unwanted slide to bottom of bed. | | | | |

### Example 13:

The knit fabric was 92% polyester, 8% elastane (jersey knit) with wicking and antibacterial treatment. Both satin and the 100% polyester with carbon fibre thread provided four directions of movement when the first vector was orthogonal to the long vector or asperities vector, respectively. With the exception of the taffeta, all provided for either lateral or longitudinal slide with high friction in the other direction when the vectors were in the parallel orientation (the 100% polyester microfiber provided for medium friction in one direction when the second vector was in the parallel orientation, rather than low friction). This provides the potential to allow two directional movement or slide (for example, either lateral or longitudinal but not both), while inhibiting four directional slide. It is expected that this knit provides superior two directional slide and could potentially be used with a wide range of weave fabrics to achieve low friction laterally and high friction longitudinally, or the converse, but less important outcome. Hence, for example, if a user is in an inclined bed, the orientation of the fabrics would be such that lateral movement was made easy, while longitudinal movement was inhibited, hence reducing or ameliorating the problem of the user sliding out of position, and ending up slumped at the foot of the bed. Again, the taffeta provided low friction in all directions independent of orientation.

**Table 11: 92% polyester, 8% elastane (jersey knit) with wicking and antibacterial treatment and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| **Relative to long/asperities vector** | Orthogonal | Parallel | Parallel | Orthogonal |
| **Satin** | 4L | 2L-2H | 2L*-2H | 4L |
| **100% polyester taffeta with carbon fiber thread** | 4L | 2L-2H | 2L*-2H | 4L |
| **100% polyester taffeta** | 4L | 4L | 4L | 4L |
| **100% polyester microfiber coated with DWR** | 2L-2MH | 2L-2H | 2L*-2H | 2L*-2MH |
| **100% polyester microfiber** | 2L-2H | 2L-2H | 2M*-2H | 2M*-2H |

| | | | | |
|---|---|---|---|---|
| * denotes lower friction laterally | | | | |

### Example 14:

The knit was 100% polyester wicking pique. Both satin and the 100% polyester with carbon fibre thread provided four directions of movement when the first vector was orthogonal to the long vector or asperities vector, respectively. They also provided for longitudinal slide with low friction and high friction laterally when the vectors were in the parallel orientation. The 100% polyester microfiber also provided for longitudinal slide with high friction in the other direction when the vectors were in the parallel orientation. Again, the taffeta provided low friction in all directions independent of orientation.

**Table 12: 100% polyester wicking pique knit and weave fabrics. The number represents the number of directions of slide, wherein 4L is indicative of low friction in all directions, and the letter represents the friction, with L being low friction, ML being medium low friction, M being medium friction, MH being medium high friction, and H being high friction.**

| | 1^{st} vector | 1^{st} vector | 2^{nd} vector | 2^{nd} vector |
|---|---|---|---|---|
| Relative to long/asperities vector | Orthogonal | Parallel | Orthogonal | Parallel |
| **Satin** | 4L | 2L-2H | 4L | 2L-2H |
| **100% polyester taffeta with carbon fiber thread** | 4L | 2L-2H | 4L | 2L-2H |
| **100% polyester taffeta** | 4L | 4L | 4L | 4L |
| **100% polyester microfiber coated with DWR** | 2L-2H | 2L-2H | 2L-2H | 2L-2H |
| **100% polyester microfiber** | 2M-2H | 2ML-2H | 2M-2H | 2L-2H |

### Example 15:

A summary of the results for the various knit fabrics demonstrates that generally speaking, surface treated fabrics do not provide good results for either low friction in all directions or low friction in one of the lateral and longitudinal directions. Those fabrics containing polyester-elastane mixes appear to be superior in both these regards. Notably, these are all jersey knits. The pique knit also performed well. However, specific combinations using the other fabrics can be seen to provide the required features of one or the other or both of low friction in all directions and low friction in two directions and high in the other two. In general, the low friction-high friction directionality occurs when one or more of the first and second vectors are parallel to one of the long vector or asperities vector.

**Table 13: Summary of results for the knit fabrics.**

| Table | Knit Fabric | Low friction in all directions | Low friction in two directions and high in other two | Total |
|---|---|---|---|---|
| 1 | 87%/13% polyester/elastane jersey knit | 6 | 8 | 14 |
| 2 | 100% nylon tricot knit | 6 | 6 | 12 |
| 3 | 100% polyester micromesh | 6 | 4 | 10 |
| 4 | 82%/18% polyester/elastane jersey knit | 6 | 10 | 16 |
| 5 | 85%/15% nylon/elastane jersey knit | 8 | 6 | 14 |
| 6 | Surface-treated 100% polyester interlock | 8 | 4 | 12 |
| 7 | Surface-treated 100% recycled polyester interlock | 8 | 6 | 11 |
| 8 | 100% polyester mesh | 8 | 2 | 10 |
| 9 | Surface-treated 47% nylon, 47% polyester, 6% elastane | 8 | 12 | 20 |
| 10 | Surface-treated 82%/18% polyester/elastane | 8 | 5 | 13 |
| 11 | 92% polyester, 8% elastane jersey knit | 8 | 8 | 16 |
| 12 | 100% polyester wicking pique | 8 | 9 | 17 |

### Example 16:

A summary of the results for the weave fabrics shows that the satin and 100% polyester with carbon fibre thread provided the greatest number of combinations that led to low friction in all directions and low friction in two directions with high friction in the other two directions. Overall, all fabrics were able to be combined with the knits to provide a reasonable number of combinations leading to low friction in two directions and high friction in the other two directions. In general, the low friction-high friction directionality occurs when one or more of the first and second vectors are parallel to one of the long vector or asperities vector.

Notably, the 100% polyester microfiber treated with DWR provided low friction in two directions and high friction in the other two directions regardless of the orientation, when paired with either the 87% polyester/13% elastane knit or the 100% polyester wicking pique knit. This fabric was superior in providing the low friction-high friction directionality. The 100% polyester taffeta provided low friction in all directions, and failed to provide any differences in friction in the different directions. This suggests that the carbon fibre thread in the taffeta with carbon fibre thread is important in imparting directionality to the fabric.

**Table 14: Summary of the results for the weave fabrics**

| | Low friction in all directions | Low friction in two directions and high in other two | Total |
|---|---|---|---|
| **Satin** | 24 | 18 | 42 |
| **100% polyester taffeta with carbon fiber thread** | 24 | 14 | 38 |
| **100% polyester taffeta** | 40 | 0 | 40 |
| **100% polyester microfiber coated with DWR** | 4 | 30 | 34 |
| **100% polyester microfiber** | 1 | 17 | 18 |

The foregoing is an example of the technology. As would be known to one of skill in the art, variations that do not alter the scope of the invention are contemplated.

## Claims

1. A combination comprising: a taffeta fabric with longitudinally disposed carbon fiber threads (a TC fabric) or a three over and one under or four over and one under weave fabric; and a machine knit fabric, the weave fabric and the TC fabric each comprising a surface having a long vector, the machine knit fabric having a first vector and a second vector or an asperities vector, wherein orientation of the long vector relative to the first and second vector or asperities vector of the machine knit fabric at a vector angle of about 45 degrees to about 135 degrees results in low friction associated with movement in all directions, and parallel orientation results in high friction associated with movement in either the lateral or longitudinal direction, but not both.

2. The combination of claim 1, wherein the surface of either the weave fabric or the TC fabric is aligned with the machine knit fabric at an orthogonal vector angle to reduce friction.

3. The combination of claim 1 or 2, wherein the first vector or the asperities vector of the machine knit fabric and the long vector of the weave fabric or the TC fabric are parallel in a portion of the surface of the machine knit fabric.

4. The combination of any one of claims 1 to 3, wherein the fabrics are aligned to reduce friction for lateral movement.

5. The combination of any one of claims 1 to 4, wherein the machine knit fabric is included in a garment.

6. The combination of claim 5, wherein the garment is selected from the group consisting of a nightgown, hospital gown, underwear, pants, pajamas, shirt, dress, shorts, boxers, a skirt, socks, sports clothing, sleeves, linings, and leggings for under athletic padding and guards, braces and supports.

7. The combination of claims 5 or 6, the garment further comprising a first section and a second section, wherein the first vector of the surface of either the weave fabric or the TC fabric is parallel to the long or asperities vector of the surface of the machine knit fabric in the first section of the garment.

8. The combination of claim 7, wherein the first vector of the surface of the weave fabric or the TC fabric is orthogonal to the long or asperities vector of the surface of the machine knit fabric in the second section of the garment.

9. The combination of any one of claims 1 to 8, wherein the weave fabric or the TC fabric is a sheet or a panel in a sheet.

10. The combination of claim 9, wherein the weave fabric or the TC fabric is a panel in the sheet and a remainder of the sheet is configured to increase friction between the machine knit fabric and the remainder of the sheet.

11. The combination of any one of claims 1 to 9, further comprising a barrier region attached to the weave fabric or the TC fabric.

12. The combination of claim 11 wherein the barrier region comprises a different fabric.

13. The combination of any one of claims 1 to 12, wherein the weave fabric or TC fabric is the weave fabric.

14. The combination of any one of claims 1 to 12, wherein the weave fabric or the TC fabric is the TC fabric.
